# EUROPEAN PATENT APPLICATION

(11) **EP 4 290 407 A1**
(43) Date of publication of application: **13.12.2023**
(21) Application number: 22177962.2
(22) Date of filing: 08.06.2022
(51) Int. Cl.: G06K 9/62, G06V 10/764, G06V 20/56, G06N 3/04

(54) **METHOD AND SYSTEM FOR UNKNOWN OBJECT DETECTION**

(71) Applicant: Bayerische Motoren Werke Aktiengesellschaft, 80809 München (DE)
(72) Inventor: Gasperini, Stefano, 80809 München (DE); Winkelmann, Frithjof, 82008 Unterhaching (DE); Marcos-Ramiro, Alvaro, 81541 München (DE); Schmidt, Michael, 85386 Eching (DE)

(57) **Abstract**

A system (200) for detecting an unseen and unknown object (212) within an input image (210) comprising a plurality of pixels is described. The system (200) comprises a semantic neural network module (220, 221, 222) configured to determine a semantic segmentation map (225) of the input image (210) and an uncertainty map (226) for the input image (210). Furthermore, the system (200) comprises an embeddings neural network module (230, 231) configured to determine an embeddings map (235) for the input image (210). In addition, the system (200) comprises a processing unit (250) configured to determine an unknown object map (255) which is indicative of one or more unseen and unknown objects (212) within the input image (210), based on the uncertainty map (226) and based on the embeddings map (235).

## Description

The present document is directed at providing a reliable and robust object detection scheme, e.g., for a driver assistance function and/or an autonomous driving function of a vehicle.

A driver assistance function and/or an autonomous driving function of a vehicle typically make use of means of perception (notably one or more sensors) of the environment of the vehicle. In this context, an object detection algorithm may be used to detect one or more objects within the environment of the vehicle based on sensor data captured by one or more environment sensors of the vehicle. The object detection algorithm may be configured to perform panoptic segmentation, which may be viewed as a combination of instance segmentation (for isolating different objects (including their contour) within an image) and semantic segmentation (for identifying different object types and/or amorphous regions, e.g., the sky, within the image).

An object detection algorithm has typically been trained using a given training dataset. The training dataset is indicative of a certain set of objects, which can be considered to be "seen" by the object detection algorithm (because the object detection algorithm as seen these object during training of the object detection algorithm). Furthermore, some or all of these objects may be considered to be "known" to the object detection algorithm, if the object detection algorithm has been trained to identify the object-types of the different objects. Example object-types are: car, truck, bus, pedestrian, bicycle, motorcycle, etc.

An object detection algorithm, in particular panoptic segmentation, typically does not perform in a reliable manner for sensor data, in particular for images, which comprise unseen and unknown objects. This may have an impact on the reliability of a vehicle function which makes use the object detection algorithm.

The present document is directed at the technical problem of enabling an efficient, reliable and/or robust detection of unseen and unknown objects. The technical problem is solved by each one of the independent claims. Preferred examples are specified in the dependent claims.

According to an aspect, a system (e.g., a processing device) for detecting one or more unseen and unknown objects within an input image is described. The system may be further configured to detect known objects (e.g., a car, a pedestrian, a truck, etc.) and/or regions (e.g., road, sky, etc.). In particular, the system may be configured to perform open-set panoptic segmentation (with regards to known and unknown objects). The input image comprises a plurality of pixels, notably a matrix of N x M pixels, wherein N and M are typically greater than 100 or greater than 500.

The system, in particular the one or more neural networks of the system, has typically been trained using a machine learning algorithm (such as a backpropagation algorithm) and a training dataset which is indicative of a set of different objects. After the training of the system, the different objects from the set of objects may be considered to be seen and (possibly) known objects for the system. An unseen and unknown object may be an object which is not comprised within the set of objects (that are shown within the training dataset), and are therefore unseen by and unknown to the (object-detection) system.

The system comprises a semantic neural network module (which may be a combination of one or more different partial neural networks) which is configured to determine a semantic segmentation map of the input image and an uncertainty map for the input image. In the present document, a map may comprise a plurality of map entries for the corresponding plurality of pixels (in particular N x M map entries). Furthermore, a neural network module may comprise one or more (partial) neural networks. The different neural network modules may form in combination an overall neural network of the system (wherein the overall neural network may be trained jointly, end-to-end, within a combined training phase).

The system may comprise an encoder network, which is configured to generate a set of features from the input image. The semantic neural network module may be or may comprise a decoder network, and may have been trained to generate the semantic segmentation map and the uncertainty map based on the set of features for the input image.

The semantic segmentation map may indicate an object-type or a region-type for each pixel of the plurality of pixels. In other words, the semantic segmentation map may comprise a segmentation of the input image into different sub-areas of pixels, each sub-area of pixels corresponding to a different object-type or a different region-type. Example object-types are car, truck, bus, pedestrian, bicycle, motorcycle, etc. Example region-types are sky, field, road, etc.

The uncertainty map may comprise an uncertainty value for each pixel of the plurality of pixels of the input image, wherein the uncertainty value of a pixel may indicate the uncertainty of the object-type or of the region-type that the pixel is assigned to within the sematic segmentation map. A relatively high uncertainty value may be indicative of a relatively high level of uncertainty of the object-type or of the region-type. On the other hand, a relatively low uncertainty value may be indicative of a relatively low level of uncertainty of the object-type or of the region-type. A relatively high level of uncertainty of the object-type may indicate that the object-type might actually not be known. It should be noted that an opposite definition of the uncertainty value may be used in an analogous manner (with small uncertainty values corresponding to high levels of uncertainty, an vice versa).

The system further comprises an embeddings neural network module (which may be or may comprises a decoder network) which is configured to determine an embeddings map for the input image (based on the set of features provided by the encoder network). The embeddings map may comprise an embeddings vector for each pixel of the plurality of pixels of the input image.

The embeddings neural network module may have been trained such that the spatial distance between embeddings vectors of different pixels is indicative of the affiliation of the different pixels to the same or to different objects. A set of pixels having embeddings vectors with relatively low spatial distance may be considered to belong to the same object. On the other hand, two pixels having embeddings vectors with relatively high spatial distance may be considered to not belong to the same object. Such a discriminative behavior of the embeddings neural network module may be achieved by using an appropriate partial loss function.

The system may have been trained using a machine learning algorithm to improve a combined loss function. The combined loss function may comprise a weighted sum of different partial loss functions, including e.g., a first partial loss function for the semantic neural network module and a second partial loss function for the embeddings neural network module. The second partial loss function for the embeddings neural network module may be a discriminative loss function. By doing this, a particularly robust system may be provided.

An example for a first partial loss function (which may be used for training the semantic neural network module) is provided in Sensoy, M., Kaplan, L.M., Kandemir, M., "Evidential deep learning to quantify classification uncertainty". In: Advances in Neural Information Processing. pp. 3183- 3193 (2018), the content of which is included herein by reference. The loss function described in the above-mentioned document may be modified, such that the loss function is applied on a per-pixel basis on the pixels of the input image.

An example for a second partial loss function (for training the embeddings neural network module) is provided in De Brabandere, B., Neven, D., Van Gool, L., "Semantic instance segmentation with a discriminative loss function". arXiv preprint arXiv: 1708.02551 (2017), the content of which is included herein by reference. Alternatively, or in addition, the loss function described in Wong, K., Wang, S., Ren, M., Liang, M., Urtasun, R.: "Identifying unknown instances for autonomous driving". In: Conference on Robot Learning (CoRL). pp. 384-393. PMLR (2020) may be used. The content of the document is included herein by reference.

The system further comprises a processing unit which is configured to determine an unknown object map, wherein the unknown object map is indicative of one or more unseen and unknown objects within the input image. The unknown object map is determined based on the uncertainty map and based on the embeddings map. In particular, a clustering algorithm such as the DBSCAN algorithm may be applied to the uncertainty map and to the embeddings map, in order to detect the one or more unseen and unknown objects within the input image.

By way of example, the processing unit may be configured to identify a subset of pixels from the plurality of pixels (wherein the subset of pixels corresponds to an unseen and unknown object), for which the uncertainty value (for each one of the pixels from the subset) is equal to or greater than a pre-determined threshold value, and/or for which the embeddings vectors (for the subset of pixels) have a distance from one another which is equal to or smaller than a pre-determined maximum (spatial) distance (i.e. for which the embeddings vectors are relatively close to one another).

Hence, a (neural-network-based) system is described which makes use of the uncertainty with regards to the semantic segmentation and of an embeddings map for detecting unseen and unknown objects in an efficient, reliable and robust manner.

The system may comprise a detection neural network module which is configured to determine a detection map for the input image (notably based on the set of features for the input image). The detection map may be indicative of the center of one or more known objects within the input image. The map entry of the detection map may indicate the probability that the respective pixel corresponds to the center of a known object. The detection neural network module may have been trained using an appropriate (third) partial loss function which is included in the combined loss function. By taking into account a detection map, the object detection scheme may be further improved.

An example for a third partial loss function (for training the detection neural network module) is described in Cheng, B., Collins, M.D., Zhu, Y., Liu, T., Huang, T.S., Adam, H., Chen, L.C.: "Panoptic-DeepLab: A simple, strong, and fast baseline for bottom-up panoptic segmentation." In: Proceedings of the IEEE/CVF Conference on Computer Vision and Pattern Recognition. pp. 12475-12485 (2020), the content of which is included herein by reference.

The system may comprise a processing unit which is configured to determine an instances map for the input image based on the detection map and based on the embeddings map, in particular using a clustering algorithm. The instances map may indicate one or more subsets of pixels from the plurality of pixels which correspond to one or more corresponding known objects within the input image. By taking into account the embeddings map, the reliability of known object detection may be further increased. In particular, the embeddings map allows identifying a pixel-wise segment of an object that has been detected based on the detection map. In other words, the embeddings map may indicate all pixels which belong to an object (wherein the object may be detected based on the detection map).

The system may comprise a prototype neural network module which is configured to determine a prototype map for the input image (e.g., based on the set of features for the input image), wherein the prototype comprises a plurality of prototype vectors for the corresponding plurality of pixels of the input image. The prototype map may represent one or more objects and/or one or more amorphous regions within the input image as one or more corresponding, multi-dimensional, vectors or arrays. The processing unit may be configured to determine the instances map for the input image also based on the prototype map, thereby further increasing the reliability of known object detection.

The system may comprise a merging unit which is configured to merge the semantic segmentation map, the unknown object map and the instances map to provide an open-set output map which is indicative of one or more known objects and their object-type, as well as one or more unseen and unknown objects within the input image. By merging the different maps into a joint output map, a particularly reliable and robust open-set detection scheme may be provided.

The system may comprise a control unit which is configured to control a vehicle function (e.g., for autonomous driving) in dependence of the unknown object map, in particular in dependence of the open-set output map, for the input image. By doing this, a particularly reliable and robust vehicle function may be provided.

According to a further aspect, a (street) vehicle (e.g., a car, a truck, a bus, a motorcycle, etc.) is described, which comprises the system described in the present document.

According to a further aspect, a method for detecting an unseen and unknown object within an input image is described, wherein the input image comprises a plurality of pixels. The method comprises determining a semantic segmentation map of the input image and an uncertainty map for the input image using a semantic neural network module. The semantic segmentation map may indicate an object-type or a region-type for each pixel of the plurality of pixels. Furthermore, the uncertainty map may comprise an uncertainty value for each pixel of the plurality of pixels of the input image, wherein the uncertainty value of a pixel indicates an uncertainty of the object-type or of the region-type that the pixel is assigned to within the sematic segmentation map.

Furthermore, the method comprises determining an embeddings map for the input image using an embeddings neural network module, wherein the embeddings map may comprise an embeddings vector for each pixel of the plurality of pixels of the input image. In addition, the method comprises determining an unknown object map which is indicative of one or more unseen and unknown objects within the input image, based on the uncertainty map and based on the embeddings map.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein
Fig. 1 shows example components of a vehicle;
Fig. 2 shows an example system for performing open-set panoptic segmentation of an input image; and
Fig. 3 shows a flow chart of an example method for performing open-set panoptic segmentation of an input image.

As indicated above, the present document is directed at performing open-set panoptic segmentation. In other words, the present document is directed at identifying instances of unknown and unseen objects, possibly on top of performing panoptic segmentation.

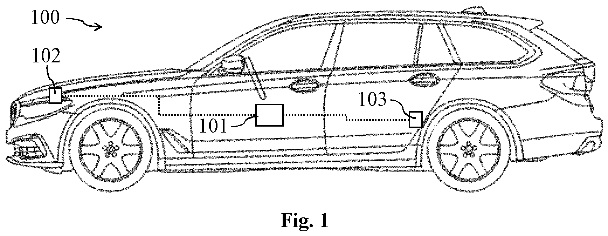

Fig. 1 shows an example vehicle 100 which comprises an environment sensor 102 (such as a camera, a radar sensor, a lidar sensor, etc.) which is configured to provide sensor data regarding the environment of the vehicle 100. A control unit 101 of the vehicle 100 may be configured to perform an object detection algorithm for detecting one or more different objects within the environment of the vehicle 100 based on the sensor data. The one or more detected objects may be taken into account within a driver assistance function and/or an autonomous driving function of the vehicle 100, e.g., for operating one or more actuators 103 of the vehicle 100 (such as a motor, a steering actuator and/or a braking actuator).

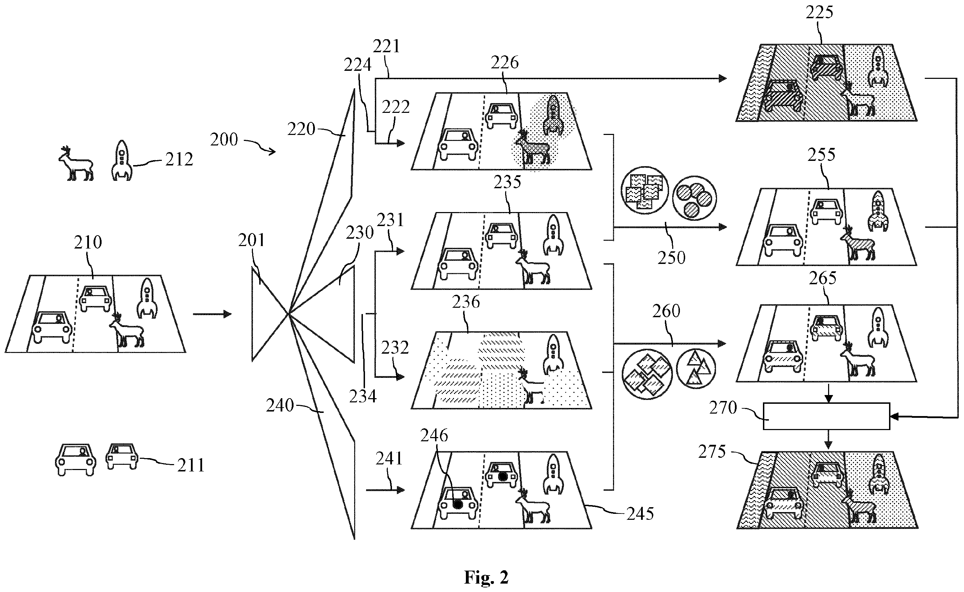

Fig. 2 shows an example system 200 for performing object detection based on an input image 210. The input image 210 may be indicative of one or more known objects 211 and/or of one or more unseen and unknown objects 212. The system 200 comprises a set of (trained) neural networks. In particular, the system 200 comprises an encoder network 201 which is configured to determine a set of features based on the input image 210. Furthermore, the system 200 may comprise one or more decoder networks 220, 230, 240, each one being configured to process the set of features provided by the encoder network 201.

In particular, the system 200 may comprise a semantic decoder 220 for performing
semantic segmentation and/or uncertainty estimation, in order to identify one or more OOD (out-of-distribution) areas within the input image 210. The semantic decoder 220 may be configured to provide a semantic output 224 (having e.g., the same dimension as the input image 210). The semantic output 224 may be processed by one or more output networks 221, 222 (which may also be referred to as heads). In particular, a semantic output network 221 may be used to provide a semantic segmentation map 225 of the input image 210, wherein the semantic segmentation map 225 indicates different classes or types for different sub-areas of pixels of the input image 210. In Fig. 2, the different sub-areas of pixels are represented by different shadings within the semantic segmentation map 225 of the input image 210.

Furthermore, an uncertainty output network 222 may be used to provide an uncertainty map 226 of the input image 210. The uncertainty map 226 may comprise an uncertainty value for each pixel of the input image 210, wherein the uncertainty value of a pixel may indicate the level of uncertainty of the class or type that this pixel has been assigned to (within the semantic segmentation map 225). In the uncertainty map 226 of Fig. 2, a relative high level of class and/or type uncertainty has been indicated by a shading of the respective pixels. A relatively high uncertainty value of a pixel may be taken as an indication for the fact that the class and/or type of the pixel is actually unknown.

The system 200 may further comprise an embeddings and/or prototype decoder 230 configured to provide an embeddings and/or prototype output 234 (possibly having the same dimensions as the input image 210). The embeddings and/or prototype output 224 may be processed by an embeddings network 231 to generate an embeddings map 235 of the input image 210. The embeddings map 235 may comprise an (multi-dimensional) embeddings vector for each pixel of the input image 210. Similar values of embedding vectors are typically indicative of pixels which belong to the same object. Hence, the embeddings map 235 may be used to identify different objects within the input image 210 (regardless of whether the objects are known or unknown).

Furthermore, a prototype output network 232 may be used to generate a prototype map 236 for the input image 210 (based on the embeddings and/or prototype output 234). The prototype map 236 comprises a (multidimensional) prototype vector for each pixel of the input image 210, wherein for an object typically only the prototype vector of the center pixel of this object is considered to be meaningful.

In addition, the system 200 may comprise a detection decoder 240 (possibly including a detection output network 241) which is configured to provide a detection map 245 of the input image 210, wherein the detection map 245 is indicative of the centers 246 of one or more known objects 211.

The uncertainty map 226 and the embeddings map 235 may be processed jointly within a processing unit 250. In particular a clustering algorithm may be used to determine one or more sub-areas of pixels within the input image 210, which
- exhibit uncertainty values that exceed a pre-determined threshold value; and
- have similar embedding vector values and/or embedding vectors which are located within the same spatial area.

As a result of this processing, an unknown object map 255 may be provided which is indicative of one or more objects with unknown object types. In Fig. 2, the unknown objects are indicted using a shading of the respective object.

The system 200 may comprise a further processing unit 260 which is configured to merge the embeddings map 235, the prototype map 236 and the detection map 246, in order to generate an instances map 265 which is indicative of one or more (known and/or seen) objects 211 within the input image 210. In Fig. 2, the different instances are indicted using respective shadings.

The semantic segmentation map 225, the unknown object map 255 and the instances map 265 may be merged within a merging unit 270 to provide an open-set output map 275. The output map 275 may be indicative of
- one or more different known objects 211 and their respective object-type;
- one or more different regions and their respective region-types (such as road, sky, field, etc.); and
- one or more different unseen and unknown objects 212 (wherein the object-type which is assigned to an object (within the semantic segmentation map 225) may be ignored).

Hence, the embeddings from the embeddings map 235 may be made instance-aware by linking the prototype map 236 and the embeddings map 235 with the detection map 245. Embeddings and/or detections may be made semantic-aware by concatenating the semantic logits to the last layers of the embeddings output network 231 and/or of the detection output network 241 (not shown in Fig. 2). In more generic terms, the semantic information from the semantic segmentation map 225 may be propagated to the embeddings output network 231 and/or to the detection output network 241. The semantic logits of a pixel within the semantic segmentation map 225 may indicate different scores for the different possible classes or types. Hence, in case of N possible classes or types, N different scores (i.e., logits) may be provided for a pixel. The highest score may indicate the predicted class and/or type of the pixel.

The prototype output network 232 typically predicts a feature vector for every pixel of the input image 210. However, for objects, these feature vectors are considered meaningful and may be called instance prototypes only at the corresponding instance centers 246 provided by the detection map 245. The prototypes represent each instance, and typically allow the different instances to be distinguished from one another.

The different networks of the system 200 may be trained (end-to-end) using training data. In particular, the different networks of the system 200 may be trained all together and/or simultaneously. Different loss functions may be taken into account for the different decoder branches. The semantic branch (comprising networks 220, 221, 222) may be trained using a partial loss function which is dependent on the uncertainty measure which is used for determining the uncertainty map 226. The detection branch (comprising networks 240, 241) may be trained using a partial loss function which is dependent on a deviation between a ground truth map of object centers 246 and the estimated detection map 245. The embeddings and/or prototype branch may be trained using a discriminative loss, as outlined e.g., in De Brabandere, B., Neven, D., Van Gool, L.: Semantic instance segmentation with a discriminative loss function. arXiv preprint arXiv: 1708.02551 (2017), which is incorporated herein by reference.

Hence, the different networks of the system 200 may be trained (end-to-end and/or simultaneously) using a combined loss function which comprises a weighted sum of partial loss functions for the different branches of the system 200.

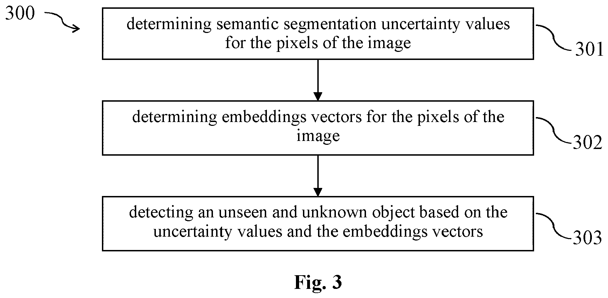

Fig. 3 shows a flow chart of an example (e.g., computer-implemented) method 300 for detecting an unseen and unknown object 212 within an input image 210 comprising a plurality of pixels. The plurality of pixels may be a matrix of N x M pixels (with N, M being greater than 100). The method 300 makes use of neural networks that have been trained using a training dataset, which is indicative of a set of objects, which (due to training) are known to the neural networks. An unseen and unknown object 212 may be an object which is not comprised within the set of objects that are reflected within the training dataset.

The method 300 comprises determining 301 a semantic segmentation map 225 of the input image 210 and an uncertainty map 226 for the input image 210 using a semantic neural network module 220, 221, 222. The input image 210 may be processed using an encoder network 201 to provide a set of features, wherein the set of features are input to the semantic neural network module 220, 221, 222 (being a decoder network plus one or more optional output networks). The semantic segmentation map 225 and/or the uncertainty map 226 may have the same dimension as the input image 210 (e.g., N x M map entries for the corresponding N x M pixels).

The semantic segmentation map 225 may indicate an object-type for each pixel of the plurality of pixels, thereby segmenting the input image 210 into one or more sub-areas for one or more different object-types.

The uncertainty map 226 may comprise an uncertainty value for each pixel of the plurality of pixels of the input image 210, wherein the uncertainty value of a pixel may indicate the uncertainty of the object-type that the pixel is assigned to within the sematic segmentation map 225. A relatively high uncertainty value may be taken as an indication for a relative uncertain object-type. In particular, a relatively high uncertainty value may indicate that the object-type is probably unknown.

The method 300 further comprises determining 302 an embeddings map 235 for the input image 210 using an embeddings neural network module 230, 231. The embeddings map 235 may have the same dimension as the input image 210 (e.g., N x M map entries for the corresponding N x M pixels).

The embeddings map 235 may comprise an embeddings vector for each pixel of the plurality of pixels of the input image 210. An embeddings vector may have a dimension of 2 or more, or of 3 or more. Typically, the higher the dimension of the embeddings vector, the more discriminative the embeddings may 235 is in terms of instances and values. The embeddings neural network module 230, 231 may have been trained such that similar (i.e., nearby) embeddings vectors of a set of pixels may be indicative of a set of pixels belonging to the same object. On the other hand, embeddings vectors which have a relative great (spatial) distance from another may be indicative of pixels which do not belong to the same object. Such a discriminative behavior of the embeddings neural network module 230, 231 may be achieved using a discriminative loss function during training of the embeddings neural network module 230, 231.

Furthermore, the method 300 comprises determining 303 an unknown object map 255 which is indicative of one or more unseen and unknown objects 212 within the input image 210, based on the uncertainty map 226 and based on the embeddings map 235 (e.g., using a clustering algorithm). The unknown object map 255 may have the same dimension as the input image 210 (e.g., N x M map entries for the corresponding N x M pixels). The unknown object map 255 may indicate a subset of pixels which correspond to an unseen and unknown object 212. By way of example, the unknown object map 255 may comprise binary map values for the plurality of pixels, wherein a "0" may indicate that the corresponding pixel is not part of an unseen and unknown object 212 and wherein a "1" may indicative that the corresponding pixel is part of an unseen and unknown object 212. Alternatively, the unknown object map 255 may comprise more than two different values per pixel (e.g., values from a given value range of rational numbers). By doing this, different unseen and unknown objects 212 may be identified.

By performing a combined processing of an embeddings map 235 and an uncertainty map 226 of a semantic segmentation, unseen and unknown objects 212 may be detected in an efficient, reliable and robust manner, thereby improving the reliability and robustness of a vehicle function which makes use of the aspects that are described in the present document.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A system (200) for detecting an unseen and unknown object (212) within an input image (210) comprising a plurality of pixels; wherein the system (200) comprises,
- a semantic neural network module (220, 221, 222) configured to determine a semantic segmentation map (225) of the input image (210) and an uncertainty map (226) for the input image (210); wherein the semantic segmentation map (225) indicates an object-type or a region-type for each pixel of the plurality of pixels; wherein the uncertainty map (226) comprises an uncertainty value for each pixel of the plurality of pixels of the input image (210); wherein the uncertainty value of a pixel indicates an uncertainty of the obj ect-type or of the region-type that the pixel is assigned to within the sematic segmentation map (225);
- an embeddings neural network module (230, 231) configured to determine an embeddings map (235) for the input image (210); wherein the embeddings map (235) comprises an embeddings vector for each pixel of the plurality of pixels of the input image (210); and
- a processing unit (250) configured to determine an unknown object map (255) which is indicative of one or more unseen and unknown objects (212) within the input image (210), based on the uncertainty map (226) and based on the embeddings map (235).

2. The system (200) of claim 1, wherein the processing unit (250) is configured to apply a clustering algorithm, in particular a DBSCAN algorithm, to the uncertainty map (226) and the embeddings map (235), in order to detect the one or more unseen and unknown objects (212) within the input image (210).

3. The system (200) of any of the claims, wherein the processing unit (250) is configured to identify a subset of pixels from the plurality of pixels as an unseen and unknown object (212), for which
- the uncertainty value is equal to or greater than a pre-determined threshold value; and
- the embeddings vectors have a distance from one another which is equal to or smaller than a pre-determined maximum distance.

4. The system (200) of any of the previous claims, wherein the system (200) comprises a detection neural network module (240, 241) configured to determine a detection map (245) for the input image (210), indicating a center (246) of one or more known objects (211) within the input image (210).

5. The system (200) of claim 4, wherein the system (200) comprises a processing unit (260) configured to determine an instances map (265) for the input image (210) based on the detection map (245) and based on the embeddings map (235), in particular using a clustering algorithm; wherein the instances map (265) indicates one or more subsets of pixels from the plurality of pixels which correspond to one or more corresponding known objects (211) within the input image (210).

6. The system (200) of claim 5, wherein
- the system (200) comprises a prototype neural network module (230, 232) configured to determine a prototype map (235) for the input image (210) which comprises a plurality of prototype vectors for the corresponding plurality of pixels of the input image (210); and
- the processing unit (260) is configured to determine the instances map (265) for the input image (210) also based on the prototype map (235).

7. The system (200) of any of claims 5 to 6, wherein the system (200) comprises a merging unit (270) configured to merge the semantic segmentation map (225), the unknown object map (255) and the instances map (265) to provide an open-set output map (275) which is indicative of one or more known objects (211) and their object-type, as well as one or more unseen and unknown objects (212) within the input image (210).

8. The system (200) of any one of the previous claims, wherein
- the system (200) has been trained using a machine learning algorithm and a training dataset which is indicative of a set of different objects (211); and
- the one or more unseen and unknown objects (212) are not comprised within the set of objects (211).

9. The system (200) of any one of the previous claims, wherein
- the system (200) has been trained using a machine learning algorithm to improve a combined loss function;
- the combined loss function comprises a weighted sum of partial loss functions, including a first partial loss function for the semantic neural network module (220, 221, 222) and a second partial loss function for the embeddings neural network module (230, 231); and
- the second partial loss function for the embeddings neural network module (230, 231) is a discriminative loss function.

10. The system (200) of any one of the previous claims, wherein the system (200) comprises a control unit (101) configured to control a vehicle function in dependence of the unknown object map (255) for the input image (210).

11. A method (300) for detecting an unseen and unknown object (212) within an input image (210) comprising a plurality of pixels; wherein the method (300) comprises,
- determining (301) a semantic segmentation map (225) of the input image (210) and an uncertainty map (226) for the input image (210) using a semantic neural network module (220, 221, 222); wherein the semantic segmentation map (225) indicates an object-type or a region-type for each pixel of the plurality of pixels; wherein the uncertainty map (226) comprises an uncertainty value for each pixel of the plurality of pixels of the input image (210); wherein the uncertainty value of a pixel indicates an uncertainty of the obj ect-type or of the region-type that the pixel is assigned to within the sematic segmentation map (225);
- determining (302) an embeddings map (235) for the input image (210) using an embeddings neural network module (230, 231); wherein the embeddings map (235) comprises an embeddings vector for each pixel of the plurality of pixels of the input image (210); and
- determining (303) an unknown object map (255) which is indicative of one or more unseen and unknown objects (212) within the input image (210), based on the uncertainty map (226) and based on the embeddings map (235).
